Europäisches Patentamt

European Patent Office

Office européen des brevets

(11) Numéro de publication: **0 055 194**
**A2**

(12) **DEMANDE DE BREVET EUROPEEN**

(21) Numéro de dépôt: **81420177.8**

(22) Date de dépôt: **25.11.81**

(51) Int. Cl.³: **B 65 G 53/40,** B 65 D 88/68

(30) Priorité: **19.12.80 FR 8027566**

(43) Date de publication de la demande: **30.06.82**
**Bulletin 82/26**

(84) Etats contractants désignés: **AT CH DE GB IT LI LU NL SE**

(71) Demandeur: **ETABLISSEMENTS AUBRIOT, F-01390 Saint Jean de Thurigneux (FR)**

(72) Inventeur: **Aubriot, Jean Pierre, Saint Jean de Thurigneux (Ain) (FR)**

(74) Mandataire: **Maureau, Pierre, Cabinet GERMAIN & MAUREAU Le Britannia - Tour C 20, Boulevard E. Déruelle, F-69003 Lyon (FR)**

(54) **Transporteur pneumatique à béton, mortier ou autres produits pâteux ou granuleux.**

(57) Ce transporteur pneumatique à béton, mortier ou autres comporte une cuve (2) d'axe vertical, à fond conique (3), avec un orifice supérieur de remplissage (4) fermé par un couvercle (5), et un orifice inférieur de vidage (6), auquel est raccordé le départ (8) d'une canalisation souple de transport du produit, des canalisations d'alimentation en air comprimé étant en outre prévues. Un agitateur rotatif (13), comprenant des bras radiaux (16) fixés à un moyeu (14) porté par un arbre horizontal (15), est disposé diamétralement dans la partie conique (3) de la cuve (2). Les bras (16) de cet agitateur (13) portent, à leur extrémité, des éléments racleurs (27), pouvant être constitués par des arceaux reliant les extrémités des bras (16) d'une même rangée. Ces bras peuvent aussi porter, en variante, des éléments racleurs individuels.

**0055194**

- 1 -

La présente invention concerne un transporteur pneumatique à béton, mortier ou autres produits pâteux ou granuleux, du type comportant une cuve d'axe vertical à fond conique, un orifice supérieur de remplissage équipé d'un couvercle de fermeture étanche, et un orifice inférieur de vidage du produit auquel est raccordée une canalisation souple de transport, par l'intermédiaire d'un raccord coudé auquel est également raccordée une canalisation d'alimentation en air comprimé, au moins une autre canalisation d'alimentation en air comprimé débouchant dans la partie supérieure de la cuve, et dans lequel est prévu un agitateur rotatif comprenant des bras fixés à un moyeu porté par un arbre horizontal disposé diamétralement dans la partie conique de la cuve, à un niveau compris entre le tiers et les deux tiers de la hauteur de cette partie conique, la longueur des bras étant telle qu'ils frolent, sans risque de la toucher, la paroi du fond conique de la cuve.

Un transporteur pneumatique de ce type est décrit par le brevet français 2 439 151, dans lequel sont aussi prévues les dispositions suivantes :

- Le mouvement de l'agitateur peut être continu ou alternatif, par exemple sur une fraction de tour, auquel cas les bras de l'agitateur sont répartis sur une fraction de circonférence légèrement supérieure à la fraction de tour effectuée par l'agitateur, lors de son fonctionnement.

- L'entraînement de cet agitateur peut être manuel et, dans ce cas, son arbre est muni d'un prolongement extérieur à la cuve et à l'extrémité duquel est calé un levier de manoeuvre ou une manivelle.

- L'entraînement en rotation continue ou alternative dudit agitateur peut aussi être assuré à partir d'un moteur pneumatique, hydraulique, électrique ou thermique.

La présence de l'agitateur et son mode de fonctionnement permettent d'obtenir, lors du vidage de la cuve, que l'écoulement du produit qu'elle contient se fasse d'une manière plus facile et, en particulier, avec réduc-

- 2 -

tion des à-coups préjudiciables à l'utilisation de l'appareil. Dans le cas des appareils anciens dépourvus d'un tel agitateur, les à-coups interdisaient de déverser directement le béton dans les banches, car ils risqueraient de les déformer par gonflement ; de même, dans la distribution du mortier en façade, ces à-coups étaient à l'origine de la formation de défauts inacceptables.

La forme d'exécution particulière décrite et représentée sur le brevet français 2 439 151 déjà cité, ou l'agitateur comporte de simples bras radiaux, conserve une certaine imperfection : les bras ont tendance à "couper en tranches" la masse de béton ou de mortier contenue dans la cuve, plutôt que de réaliser un véritable brassage. En outre, des bras simplement radiaux exercent, par leurs seules extrémités, une action insuffisante près de la paroi du fond conique de la cuve. Il peut en résulter, dans le cas de certains matériaux à transporter, la subsistance de poches d'air, lesquelles sont précisément à l'origine des à-coups signalés plus haut.

L'objet de la présente invention est de perfectionner l'appareil connu par le brevet français 2 439 151 en fournissant une réalisation particulière de l'agitateur rotatif, procurant un brassage plus efficace ainsi qu'un véritable raclage de la paroi conique.

A cet effet, dans le transporteur pneumatique à béton, mortier ou autres produits selon la présente invention, au moins une partie des bras radiaux de l'agitateur rotatif portent, à leur extrémité éloignée de leur moyeu support, au moins un élément racleur qui s'étend, suivant une direction non radiale, dans un plan contenant l'axe de rotation de l'agitateur.

Les bras radiaux sont ainsi complétés par des éléments orientés différemment,qui permettent notamment à l'agitateur d'être plus efficace à proximité de la paroi du fond conique de la cuve.

Suivant une première forme de réalisation, les différents bras d'une même rangée, c'est-à-dire situés dans un même demi-plan limité par l'axe de leur moyeu porteur, sont munis à leur extrémité d'éléments racleurs individuels, une partie au moins de ces éléments racleurs ayant une disposition non parallèle à l'axe de rotation de l'agitateur. Dans ce cas, l'on prévoit avantageusement que les éléments racleurs, portés par les bras les plus proches de la paroi du fond conique de la cuve, ont une inclinaison correspondant sensiblement à l'inclinaison de cette paroi conique. Par contre, les bras fixés au centre du moyeu porteur peuvent porter des éléments racleurs sensiblement parallèles à l'axe de rotation de l'agitateur.

Suivant une seconde forme de réalisation, les bras d'une même rangée, c'est-à-dire situés dans un même demi-plan limité par l'axe de leur moyeu porteur, ont leurs extrémités reliées par un élément racleur commun, en forme d'arceau ayant sa concavité tournée en direction du moyeu. On comprend aisément que cette autre forme de réalisation permet de disposer d'éléments racleurs qui suivent, de manière "continue", la paroi intérieure conique de la cuve.

De préférence, chaque élément racleur en forme d'arceau est fixé de manière démontable, par exemple au moyen de vis qui le relient aux extrémités d'une partie ou de la totalité des bras d'une même rangée. Cette dernière disposition facilite le remplacement des éléments racleurs après usure.

De toute façon, l'invention sera bien comprise à l'aide de la description qui suit, en référence au dessin schématique annexé représentant, à titre d'exemples non limitatifs, deux formes d'exécution de ce transporteur pneumatique à béton, mortier ou autres :

Figure 1 en est une vue de côté, en élévation ;

Figure 2 est une vue en coupe verticale de la cuve de l'appareil selon figure 1, montrant une réalisation de l'agitateur avec éléments racleurs individuels portés par les différents bras d'une même rangée ;

Figure 3 est une vue en coupe similaire à figure 2, mais montrant une réalisation de l'agitateur avec éléments racleurs en forme d'arceau reliant les bras d'une même rangée ;

Figure 4 est une vue de détail, illustrant la fixation démontable de l'un de ces éléments racleurs en forme d'arceau.

Le transporteur pneumatique à béton, mortier ou autres produits similaires représenté sur le dessin comporte, comme déjà décrit dans le brevet français 2439 151, une cuve 2 à fond conique 3, présentant un orifice supérieur 4 ou orifice de remplissage équipé d'un couvercle de fermeture étanche 5, et un orifice inférieur 6 de vidage de produit. Cet orifice inférieur 6 est raccordé à la canalisation souple 7 de transport du béton, mortier ou autre produit, au moyen d'un raccord coudé 8.

Une canalisation 9 débouchant dans la partie supérieure de la cuve 2, et reliée par une autre canalisation 11 à une source d'air comprimé, non représentée sur le dessin, permet d'introduire de l'air comprimé dans le haut de la cuve 2. Cette même canalisation d'alimentation en air comprimé 11 est encore reliée par une canalisation 12 au raccord coudé 8, de manière à déboucher dans ce raccord en amont et dans l'axe de sa branche de sortie 8a. On conçoit aisément que l'arrivée d'air comprimé dans la cuve 2 et dans le raccord 8 tend à provoquer l'écoulement du béton dans la-canalisation de transport 7.

Il est prévu, dans la cuve 2, un agitateur rotatif 13 comprenant un moyeu 14 porté par un arbre 15, auquel il est lié en rotation et portant lui-même des bras 16 disposés sensiblement radialement. L'arbre 15 est supporté horizontalement par des paliers 17 fixés à la paroi du fond conique 3 de la cuve 2 à un niveau h compris entre le tiers et les deux tiers de la hauteur totale H dudit fond conique 3.

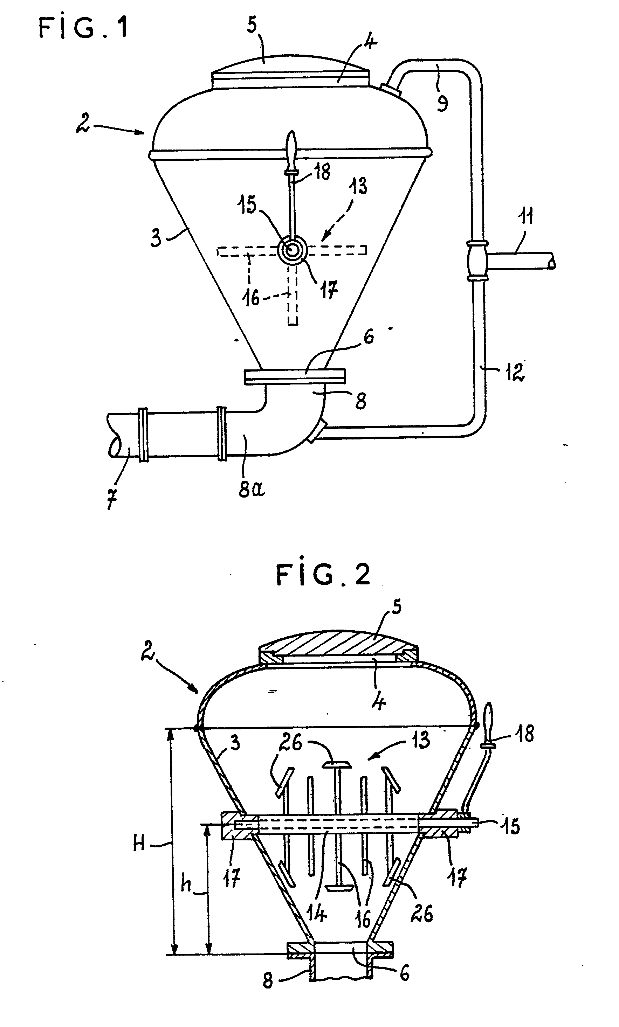

Dans les exemples illustrés par le dessin, les moyens d'entraînement en rotation de l'arbre 15 sont constitués par un levier 18 calé à l'extrémité de l'arbre 15 située à l'extérieur de la cuve 2. La manoeuvre de l'agitateur 13 consiste en un mouvement alternatif dont l'amplitude est d'environ 90°. On comprend aisément que, dans ce cas, il est inutile que le moyeu 14 soit équipé de bras 16 sur toute sa périphérie et qu'il suffit que ces bras soient répartis sur seulement 180°, par exemple en trois rangées comme illustré en pointillés sur la figure 1.

Le levier 18 pourrait être remplacé par une manivelle permettant d'entraîner l'arbre 15 et, par conséquent, l'agitateur 13, en un mouvement continu de rotation et, dans ce cas, le moyeu 14 peut porter quatre rangées de bras 16 au lieu de trois.

Naturellement, on pourrait tout aussi bien prévoir un entraînement de l'agitateur 13 non pas manuel, mais à l'aide d'un moteur pneumatique, hydraulique, électrique ou thermique, et cet entraînement motorisé pourrait faire décrire à l'agitateur 13 soit un mouvement de rotation alternatif sur une fraction de tour, soit un mouvement de rotation continu.

Dans la forme de réalisation représentée sur la figure 2, et conformément à la présente invention, une partie des bras radiaux 16 de l'agitateur 13 portent, à leur extrémité éloignée du moyeu 14, des éléments racleurs 26, qui s'étendent suivant une direction non radiale, dans un plan contenant l'axe du moyeu 14, c'est-à-dire l'axe de rotation de l'agitateur 13. Les éléments racleurs 26 sont ici individuels, en ce sens que chacun d'eux est porté par un seul bras 16. Compte tenu de l'encombrement de ces éléments racleurs 26, on prévoit par exemple que ceux-ci sont portés seulement par un bras sur deux, dans chaque rangée de bras 16.

Comme le montre encore la figure 2, les éléments racleurs 26 portés par les bras 16 extrêmes, donc les plus proches de la paroi du fond conique 3 de la cuve 2, ne sont pas parallèles à l'axe de rotation de l'agitateur 13, mais possèdent une inclinaison qui correspond sensiblement à celle de la paroi du fond conique 3, de manière à se trouver pratiquement tangents à ladite paroi. Par contre, les autres éléments racleurs 26 portés par les bras 16 fixés au centre du moyeu 14 sont sensiblement parallèles à l'axe de ce moyeu 14, donc à l'axe de rotation de l'agitateur 13 ; cette disposition permet aussi aux éléments racleurs 26 portés par les bras centraux de tangenter la paroi du fond conique 3 au cours de la rotation de l'agitateur 13.

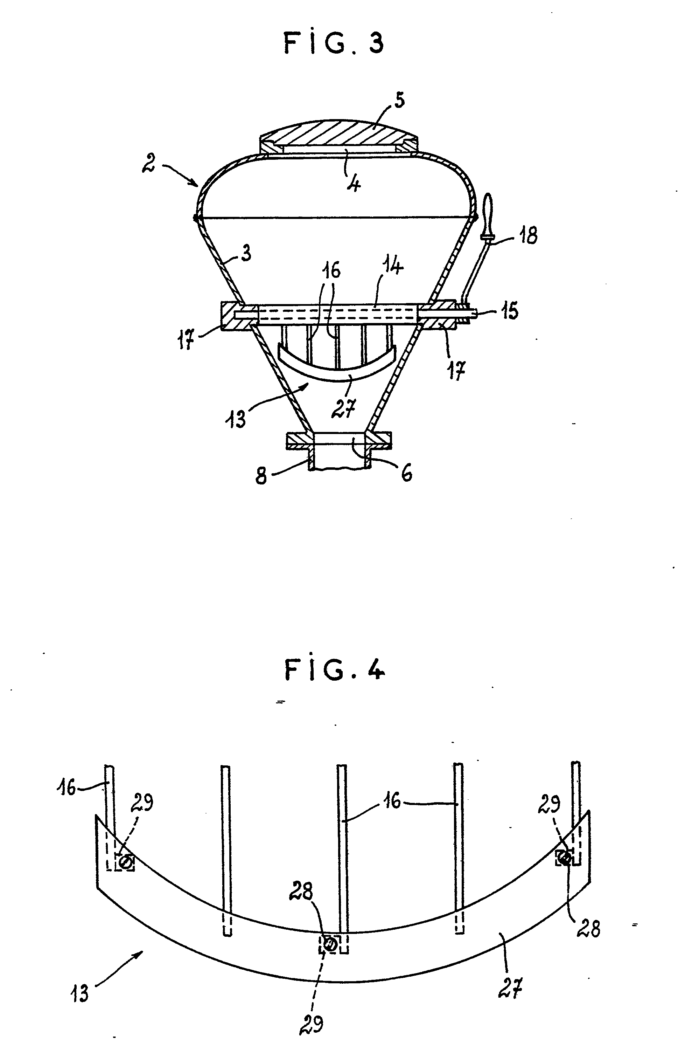

Dans la forme de réalisation illustrée par les figures 3 et 4, les éléments racleurs individuels décrits précédemment sont remplacés par des éléments racleurs 27 en forme d'arceau, dont chacun est commun à tous les bras 16 d'une même rangée. Ces éléments racleurs en forme d'arceau 27 ont leur concavité tournée en direction du moyeu 14, de sorte que leur bord extérieur convexe est tourné en direction de la paroi du fond conique 3 de la cuve 2, et puisse pratiquement tangenter cette paroi au cours de la rotation de l'agitateur 13.

Chaque élément racleur en forme d'arceau 27 est par exemple fixé à l'extrémité d'un bras 16 sur deux, ce qui est suffisant pour sa bonne tenue. Comme le montre la figure 4, l'élément racleur considéré 27 est fixé de manière amovible, au moyen de vis 28, sur des parties 29 en forme de patte pliée ou de bloc massif, prévues aux extrémités des bras 16.

Les bras radiaux 16 de chaque rangée peuvent être de longueurs égales ou inégales, auquel cas les bras les plus proches du centre de la cuve 2 sont les plus longs. Dans tous les cas, la longueur des bras 16 est établie de manière à permettre aux éléments racleurs 26 ou 27, portés par ces bras, de froler sans la toucher la paroi du fond conique 3 de la cuve 2, lorsque l'agitateur 13 est entraîné en rotation.

Dans les exemples illustrés par le dessin et qui viennent d'être décrits, l'agitateur 13 est constitué par le moyeu 14 portant les bras 16, qui eux-mêmes portent les éléments racleurs 26 ou 27. Cette disposition facilite le démontage complet de l'agitateur 13, qui peut être remplacé après usure sans aucune difficulté et sans obligation d'avoir recours à un spécialiste.

Les bras 16 ont été représentés comme constitués par des fers plats rectilignes, mais ils pourraient tout aussi bien être conformés différemment sans sortir du cadre de l'invention : ils pourraient, par exemple, être réalisés à la manière de pales, vrillées ou non, pour être rendus plus efficaces encore, selon la nature du produit transporté. La représentation des éléments racleurs 27 comme des fers plats cintrés, fixés au moyen de vis 28, n'a de même aucun caractère limitatif : les détails des éléments racleurs 26 ou 27, ainsi que de leur fixation aux bras 16, peuvent eux aussi donner lieu à de nombreuses modifications ou adaptations, sans que l'on s'écarte du principe de l'invention.

Enfin, il n'a pas été représenté, sur le dessin, de moyen de liaison en rotation entre le moyeu 14 et l'arbre 15, mais il est évident que l'on peut prévoir tout moyen connu tel que clavette, vis de blocage ou autre, permettant de préférence un démontage et un remplacement faciles comme déjà indiqué ci-dessus.

0055194

- 8 -

REVENDICATIONS

1. - Transporteur pneumatique à béton, mortier ou autres produits pâteux ou granuleux, du type comportant une cuve d'axe vertical à fond conique, un orifice supérieur de remplissage équipé d'un couvercle de fermeture étanche, et un orifice inférieur de vidage du produit auquel est raccordée une canalisation souple de transport par l'intermédiaire d'un raccord coudé auquel est également raccordée une canalisation d'alimentation en air comprimé, au moins une autre canalisation d'alimentation en air comprimé débouchant dans la partie supérieure de la cuve, et dans lequel est prévu un agitateur rotatif constitué par des bras fixés sensiblement radialement à un moyeu porté par un arbre horizontal disposé diamétralement dans la partie conique de la cuve, à un niveau compris entre le tiers et les deux tiers de la hauteur de cette partie conique, la longueur des bras étant telle qu'ils frolent, sans risque de la toucher, la paroi du fond conique de la cuve, caractérisé en ce qu'au moins une partie des bras radiaux (16) de l'agitateur rotatif (13) portent, à leur extrémité éloignée de leur moyeu support (14), au moins un élément racleur (26 ; 27) qui s'étend, suivant une direction non radiale, dans un plan contenant l'axe de rotation de l'agitateur (13).

2. - Transporteur selon la revendication 1, caractérisé en ce que les différents bras (16) d'une même rangée, c'est-à-dire situés dans un même demi-plan limité par l'axe de leur moyeu porteur (14), sont munis à leur extrémité d'éléments racleurs individuels (26), une partie au moins de ces éléments racleurs ayant une disposition non parallèle à l'axe de rotation de l'agitateur (13).

3. - Transporteur selon la revendication 2, caractérisé en ce que les éléments racleurs (26), portés par les bras (16) les plus proches de la paroi du fond conique (3) de la cuve (2), ont une inclinaison correspondant sensiblement à l'inclinaison de cette paroi conique.

4. - Transporteur selon la revendication 3, caracté-

0055194

risé en ce que les bras (16) fixés au centre du moyeu porteur (14) portent des éléments racleurs (26) sensiblement parallèles à l'axe de rotation de l'agitateur (13).

5. - Transporteur selon la revendication 1, caractérisé en ce que les bras (16) d'une même rangée, c'est-à-dire ceux situés dans un même demi-plan limité par l'axe de leur moyeu porteur (14), ont leurs extrémités reliées par un élément racleur commun (27), en forme d'arceau ayant sa concavité tournée en direction du moyeu (14).

6. - Transporteur selon la revendication 5, caractérisé en ce que chaque élément racleur en forme d'arceau (27) est fixé de manière démontable, par exemple au moyen de vis (28) qui le relient aux extrémités d'une partie ou de la totalité des bras (16) d'une même rangée.

0055194

FIG.1

FIG.2

# FIG. 3

# FIG. 4